(19) Europäisches Patentamt
European Patent Office
Office européen des brevets

(11) EP 0 567 868 B1

(12) **EUROPÄISCHE PATENTSCHRIFT**

(45) Veröffentlichungstag und Bekanntmachung des Hinweises auf die Patenterteilung:
**30.10.1996 Patentblatt 1996/44**

(51) Int Cl.6: **C09C 1/00**, C09D 7/12, C08K 3/00

(21) Anmeldenummer: **93106225.1**

(22) Anmeldetag: **16.04.1993**

(54) **Elektrisch leitfähiges Pigment**

Electrically conductive pigment

Pigment électroconducteur

(84) Benannte Vertragsstaaten:
**DE ES FR GB IT**

(30) Priorität: **25.04.1992 DE 4213747**
**19.12.1992 DE 4243163**

(43) Veröffentlichungstag der Anmeldung:
**03.11.1993 Patentblatt 1993/44**

(73) Patentinhaber: **MERCK PATENT GmbH**
**D-64271 Darmstadt (DE)**

(72) Erfinder:
- **Dietz, Johann, Dr.**
  **W-6057 Dietzenbach (DE)**
- **Franz, Klaus, Dr.**
  **W-6233 Kelkheim (DE)**
- **Pfaff, Gerhard, Dr.**
  **W-6115 Münster (DE)**
- **Vogt, Reiner, Dr.**
  **W-6100 Wixhausen (DE)**
- **Nitta, Katsuhisa**
  **Fukushima-Pref.971 (JP)**

(56) Entgegenhaltungen:
**EP-A- 0 373 575** **EP-A- 0 448 946**
**EP-A- 0 511 694**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 567 868 B1

## Beschreibung

Die Erfindung betrifft helle, elektrisch leitfähige, plättchenförmige oder auch nicht plättchenförmige Pigmente, wobei ein entsprechend geformtes Substrat mit einer elektrisch leitfähigen Schicht überzogen ist.

In vielen Bereichen der Technik besteht ein Bedarf an leitfähigen Pigmenten, mit denen z.B. elektrisch leitfähige, antistatische oder elektromagnetische Wellen abschirmende Kunststoffe, Lacke, Beschichtungen, Fasern o.ä. hergestellt werden können. In großen Mengen wird dazu leitfähiger Ruß eingesetzt, der jedoch aufgrund seiner hohen Lichtabsorption im sichtbaren Spektralbereich nicht für transparente, helle oder farbige Beschichtungen eingesetzt werden kann. Ein weiteres Problem ist die starke Absorption von Ruß im IR-Bereich, was z.B. bei Sonneneinstrahlung zu einer vielfach unerwünschten Erwärmung der beschichteten Gegenstände führt.

In EP 0,373,575 werden leitfähige plättchenförmige Pigmente beschrieben, bei denen ein plättchenförmiges, mit einem oder mehreren Metalloxiden beschichtetes Substrat mit einer leitfähigen Schicht aus mit Antimon dotierten Zinnoxid überzogen ist, wobei zwischen der leitfähigen Schicht und der Metalloxidschicht eine dünne $SiO_2$-Schicht angeordnet iSt. Die Reflexion von IR-Strahlung dieser Pigmente erfüllt jedoch nicht alle Anforderungen. Darüber hinaus können wegen der Eigenfarbe der mit Antimon dotierten Zinnoxidschicht zwar helle und farbige, nicht jedoch weitgehend transparente Pigmente erhalten werden. Letztere sind z.B. von Interesse zur Herstellung von elektrisch leitfähigen Klarlackbeschichtungen.

US-A-4 431 764 beschreibt transparente, elektrisch leitfähige Überzüge, die aus einem filmbildenden Bindemittel und fein verteiltem Zinnoxid bestehen, das mit 0,1 bis 20 Gew.-% Antimon in Form von $Sb_2O_3$ oder $Sb_2O_5$ dotiert ist.

Solche elektrisch leitfähigen Zinnoxide haben aber den Nachteil, daß sie je nach Antimongehalt und Glühtemperatur unterschiedlich stark blau eingefärbt sind. Hinzu kommt, daß antimonhaltige Zinnoxide sowie allgemein antimonoxidhaltige Stoffe heute arbeitsmedizinisch nicht unbedenklich erscheinen. Um möglichst hellfarbene Produkte zu erhalten und Antimon als Dotierstoff zu ersetzen, werden neuerdings halogendotierte Zinnoxide eingesetzt.

In JP 60-223167 und JP 62-050344 werden mit Indium-Zinnoxid (ITO) beschichtete Mica- und Kaolinit-Plättchen beschrieben, die sich durch eine relativ hohe Transparenz und eine relativ gute elektrische Leitfähigkeit auszeichnen. Das dort angegebene Verfahren zur Herstellung dieser Pigmente, wonach die Beschichtung durch Erhitzen einer alkoholischen, mit $InCl_3$ und $SnCl_4$ versetzten Suspension der Substrate und Verdampfen des Alkohols erfolgt, ist jedoch sehr aufwendig und führt zu nicht sehr gleichmäßigen ITO-Schichten.

EP-A-0 448 946 offenbart elektrisch leitfähige, halogendotierte Zinn-IV-oxide mit höchstens 2 Gew.-% zweiwertigem Zinn und 0,1 bis 2,5 Gew.-% Halogeniden. Sie werden als Füllstoff oder Pigment in Kunststoffen, Lacken, Farben, Papier, Textilien und Tonern verwendet. Der spezifische Widerstand der Zinn-IV-oxide beträgt weniger als 50 $\Omega \cdot m$.

Nachteilig jedoch ist, daß je nach Herstellung, Art und Menge der Dotierung die erhaltener Produkte grau bis hellfarben sind. Außerdem lassen sich die annähernd kugelförmigen Zinnoxidpartikel nur mit eheblichem Aufwand in die in Frage kommenden Anwendungssysteme einarbeiten. Weiterhin ist bekannt, daß einem Anwendungssystem eine hohe elektrische Leitfähigkeit nur erteilt werden kann, wenn ihm eine so große Pigmentmenge zugesetzt wird, daß viele einander benachbarte Teilchen sich berühren. Das erfordert bei einem kugelförmigen Material besonders hohe Einsatzmengen, die die Eigenschaften des Anwendungssystems negativ beeinflussen können.

Aufgabe der vorliegenden Erfindung ist es, ein leitfähiges Pigment bereitzustellen, das hell ist, ein hohes Reflexionsvermögen für IR-Strahlung besitzt und dessen Deckvermögen für den jeweiligen Anwendungszweck optimiert werden kann.

Diese Aufgabe wird gemäß der Erfindung gelöst durch ein helles, elektrisch leitfähiges Pigment auf der Basis eines, gegebenenfalls mit einer oder mehreren Metalloxidschichten überzogenen Substrates und mit Halogeniden dotiertem Zinn- und/oder Titanoxid als leitfähige Schicht.

Gegenstand der Erfindung sind auch Lacke, Druckfarben, Kunststoffe oder Coatings, welche mit dem erfindungsgemäßen Pigment pigmentiert sind.

Die Substrate sind plättchenförmig. Plättchenförmige Substrate, welche bevorzugt sind, weisen in der Hauptdimension eine Ausdehnung von weniger als 500 und insbesondere weniger als 250 µm auf, und die dicke beträgt vorzugsweise weniger als 10, insbesondere nicht mehr als 5 und ganz besonders 0,1-3 µm. Das Verhältnis aus der Ausdehnung in der Hauptdimension zur Dicke (aspect ratio) beträgt bei den plättchenförmigen Substraten mehr als 3 und vorzugsweise mehr als 5.

Die plättchenförmigen Substrate basieren auf plättchenförmigen und vorzugsweise transparenten oder semitransparenten Substraten aus z.B. Schichtsilikaten wie etwa Glimmer, Talkum, Kaolin, aus Glas oder anderen silikatischen Mineralien. Daneben kommen auch Metallplättchen wie z.B. Aluminiumplättchen oder plättchenförmige Metalloxide wie z.B. plättchenförmiges Eisenoxid oder Wismutoxychlorid in Betracht, wobei diese Aufzählung lediglich beispielhaft gemeint ist und die Erfindung nicht begrenzen soll.

Das Substrat kann direkt mit der elektrisch leitfähigen Schicht aus mit Halogen dotiertem Zinn- und/oder Titanoxid beschichtet sein, wobei es jedoch im Fall nicht-silikatischer Substrate bevorzugt ist, wenn sich zwischen Substratoberfläche und elektrisch leitfähiger Schicht eine ggf. hydratisierte Siliciumdioxidschicht oder eine Schicht eines anderen

unlöslichen Silikats befindet. Die Aufbringung dieser isolierenden Schicht erfolgt bei plättchenförmigen und nicht plättchenförmigen Substraten vorzugsweise nach dem in EP 0,375,575 angegebenen Verfahren. Das Substrat kann aber auch zunächst mit einer oder mehreren Schichten aus z.B. Chromoxid, Eisenoxid, Zirkoniumoxid, Aluminiumoxid, Zinnoxid und/oder weiteren, farblosen oder farbigen Metalloxiden überzogen werden, bevor die elektrisch leitende Schicht aus mit Halogen dotiertem Zinn- und/oder Titanoxid als äußere Schicht aufgebracht wird. Auch in diesem Fall ist es häufig bevorzugt, daß zwischen der Metalloxidschicht bzw. den Metalloxidschichten und der äußeren leitfähigen Schicht eine $SiO_2$- bzw. Silikatschicht angeordnet wird.

Die $SiO_2$- bzw. Silikatzwischenschicht macht vorzugsweise zumindest etwa 5 Gew.%, berechnet als $SiO_2$ und bezogen auf die Masse des Substrats, aus. Nach oben sind an sich keine Grenzen gesetzt, aber es zeigt sich, daß sehr dicke Zwischenschichten häufig keine Verbesserung der Pigmenteigenschaften, insbesondere keine Erhöhung der Leitfähigkeit, mehr bewirken. Besonders bevorzugt sind daher $SiO_2$- bzw. Silikatzwischenschichten mit einem auf die Substratmasse bezogenen Massenanteil zwischen 5 und 30 Gew.%.

Erfindungsgemäße Pigmente, welche neben der äußeren leitfähigen Schicht und ggf. der $SiO_2$- bzw. Silikatzwischenschicht nicht mehr als 2 zusätzliche Metalloxidschichten aufweisen, sind bevorzugt.

Als Metalloxide werden dabei sowohl farblose hochbrechende Metalloxide, wie insbesondere Titandioxid und/oder Zirkoniumdioxid, als auch farbige Metalloxide, wie z.B. Chromoxid, Nickeloxid, Kupferoxid und insbesondere Eisenoxide, wie z.B. $Fe_2O_3$ oder $Fe_3O_4$ oder Mischungen solcher Metalloxide verwendet. Solche Metalloxid/Glimmerpigmente sind unter dem Handelsnamen Afflair® und Iriodin® (Hersteller: E. MERCK, Darmstadt) im Handel erhältlich.

Besonders bevorzugt als Trägermaterialien sind auch plättchenförmige Pigmente, die gemäß der internationalen Anmeldung PCT/EP 92/02 351 hergestellt werden.

Sie bestehen aus einer transparenten, anorganischen plättchenförmigen Matrix, vorzugsweise Siliciumdioxid, die ein nichtlösliches Farbmittel enthalten kann. Wenn zum Beispiel ein hochtransparentes leitfähiges Pigment hergestellt werden soll, wird ein plättchenförmiges Trägermaterial eingesetzt, dessen Matrix lediglich aus Siliciumdioxid besteht.

Diese leitfähigen Pigmente sind besonders geeignet zur Herstellung von elektrisch leitfähigen Klarlacken oder transparenten Elektrodenschichten.

Wird aber ein helles, leitfähiges Pigment mit hohem Deckvermögen verlangt, werden in die transparente Matrix nichtlösliche Farbmittel, beispielsweise Titandioxidpartikel, eingearbeitet. Der Vorteil dieses bevorzugten Trägermaterials besteht darin, daß man bereits für die Herstellung des erfindungsgemäßen Pigmentes von einem Trägermaterial mit hohem Deckvermögen ausgehen kann.

Die einzelnen Metalloxidschichten sind vorzugsweise nicht dicker als 500 nm und insbesondere zwischen 80 und 300 nm dick. Der auf die Substratmasse bezogene Massenanteil der einzelnen Metalloxidschichten beträgt vorzugsweise zwischen 20 und 200 Gew.% und insbesondere zwischen 20 und 150 Gew.%.

Bevorzugt sind erfindungsgemäße elektrisch leitfähige Pigmente auf der Basis plättchenförmiger Substrate. Diese Pigmente ordnen sich aufgrund ihrer plättchenförmigen Struktur in ebenen Beschichtungen parallel zueinander an und das an den Grenzflächen der verschiedenen Schichten dieser Pigmentteilchen reflektierte Licht und das von verschiedenen, parallel zueinander orientierten Pigmentteilchen reflektierte Licht interferiert, wodurch es zur Ausbildung von blickwinkelabhängigen Interferenzfarben kommt, wie dies z.B. in L.M. Greenstein, Optical behaviour of nacreous and interference pigments, Pigment Handbook, New York 1973, S. 357 ff. beschrieben ist. Die Interferenzfarben werden von ggf. vorhandenen Absorptionsfarben überlagert, welche von einem gefärbten Substrat und/oder einer farbigen Metalloxidschicht herrühren können und verleihen dem Pigment einen ästhetisch sehr reizvollen, ggf. andersfarbigen glänzenden Schimmer.

Bezüglich der elektrischen Leitfähigkeit liegt der Vorteil der erfindungsgemäßen Pigmente darin, daß sich diese durch ihre plättchenförmige Gestalt günstig in Anwendungssysteme wie Lacke, Kunststoffe etc. einarbeiten lassen. Dabei kommt es zur Ausbildung von Berührungsstellen zwischen den Pigmentpartikeln, was wiederum zu einer guten Leitfähigkeit im Anwendungssystem führt.

Die spezielle Ausgestaltung der erfindungsgemäßen Pigmente hängt von dem jeweiligen Anforderungsprofil ab.

Im sichtbaren Spektralbereich weitgehend transparente Pigmente basieren z.B. insbesondere auf silikatischen Substraten aus z.B. Glas, $SiO_2$, Glimmer, Kaolin, Talkum, etc., welche direkt mit der elektrisch leitfähigen Schicht aus mit Halogen dotiertem Zinn- und/oder Titanoxid beschichtet sind; daneben ist es auch möglich, daß das Substrat zunächst mit einem farblosen Metalloxid aus z.B. Zinnoxid, Zirkonoxid und/oder Aluminiumoxid beschichtet ist, worauf sich ggf. eine dünne Zwischenschicht aus $SiO_2$ oder anderen unlöslichen Silikaten und anschließend dann die äußere leitfähige Schicht befindet. Diese besonderes bevorzugten Pigmente zeichnen sich durch eine hohe Transparenz, eine hohe elektrische Leitfähigkeit und ein hohes Reflexionsvermögen für IR-Strahlung aus und sind besonders geeignet zur Herstellung von elektrisch leitfähigen Klarlacken, transparenten Elektrodenschichten und für ähnliche Anwendungen. Bei im Sichtbaren transparenten plättchenförmigen Pigmenten, welche bevorzugt sind, kann zu diesen Eigenschaften noch die einer Interferenzfarbe hinzutreten, welche im wesentlichen durch die Dicke der elektrisch leitfähigen Schicht festgelegt wird (s. z.B. L. Armanini, Pigment and Resin Technology, Oktober 1988, S. 4 ff.).

Ist dagegen ein elektrisch leitfähiges, farbiges Pigment, ggf. mit hohem Deckvermögen gewünscht, kann z.B. ein

Substrat aus farbigen Metalloxiden oder ein stark reflektierendes Metallsubstrat verwendet werden und/oder das Substrat kann mit einer oder mehreren farbigen Schichten aus einem oder mehreren Metalloxiden beschichtet werden.

Werden transparente oder semitransparente Substrate aus z.B. Glas, $SiO_2$, Glimmer, Kaolin, Talkum o.ä. Materialien zunächst mit einer oder mehreren farbigen Metalloxidschichten überzogen, resultiert ein farbiges, ggf. zusätzlich eine Interferenzfarbe aufweisendes Pigment mit hoher elektrischer Leitfähigkeit und großem Reflexionsvermögen für IR-Strahlung, welches aber oftmals nur durch ein relativ geringes Deckvermögen charakterisiert ist. Dagegen wird durch die Verwendung metallischer Substrate bzw. von Metalloxidsubstraten vielfach ein sehr hohes Deckvermögen erhalten.

Besonders bevorzugt sind plättchenförmige Pigmente auf der Basis von Metallplättchen aus z.B. Al, Cr, Fe, Stahl o.ä., welche zunächst mit einer dünnen Schicht aus $SiO_2$ oder einem anderen Silikat bedeckt sind, worauf sich die äußere leitfähige Schicht aus mit Halogen dotiertem Zinn- und/oder Titanoxid befindet.

Besonders bevorzugt sind weiter plättchenförmige Pigmente auf der Basis transparenter oder semitransparenter Substrate aus Glas, $SiO_2$, Glimmer, Talkum, Kaolin o.ä. Materialien, wobei das Substrat zunächst mit einer oder mehreren farbigen Metalloxidschichten bedeckt ist, worauf sich, ggf. von einer Zwischenschicht aus $SiO_2$ oder einem anderen unlöslichen Silikat getrennt, die äußere leitfähige Schicht befindet. Derartige Pigmente zeichnen sich durch eine blickwinkelunabhängige Absorptionsfarbe, ggf. eine blickwinkelabhängige Interferenzfarbe, ein relativ geringes bis mittleres Deckvermögen, eine hohe Leitfähigkeit und ein hohes Reflexionsvermögen für IR-Strahlung aus.

Der entscheidende Unterschied zwischen den erfindungsgemäßen Pigmenten besteht in der äußeren elektrisch leitfähigen Schicht, welche von mit Halogen dotiertem Zinn- und/oder Titanoxid gebildet wird.

Die Aufbringung dieser Überzüge auf die ggf. vorbeschichteten Substrate kann z.B. in einem Wirbelbettverfahren, etwa gemäß folgenden Reaktionsgleichungen erfolgen:

$$SnCl_4(SnCl_2) + xNH_4X + \xrightarrow{300\text{-}700\ °C,\ +H_2O/-HCl} SnO_{2-x}X_x + xNH_4Cl$$

$$TiCl_4 + xNH_4X \xrightarrow{650\text{-}1000\ °C,\ +H_2O/-HCl} TiO_{2-x}X_x + xNH_4Cl$$

Die Aufbringung der Schichten erfolgt vorzugsweise in den angegebenen Temperaturintervallen, wobei in dem überlappenden Temperaturbereich auch die Abscheidung von Mischschichten möglich ist. Die Abscheidung von $SnO_{2-x}X_x$ erfolgt insbesondere bei 300-600 °C und die von $TiO_{2-x}X_x$ vorzugsweise bei 800-1000 °C.

Wirbelbettbeschichtungsverfahren sind an sich bekannt; so wird z.B. in EP 0,106,235 ein Verfahren zur Beschichtung plättchenförmiger Substrate mit Metalloxiden beschrieben und in DE 24 54 138 ist ein Verfahren zur Beschichtung von isometrischen Teilchen angegeben. Das erfindungsgemäße Verfahren orientiert sich an den dort beschriebenen Verfahrensvarianten, wobei jedoch auch größere Abweichungen möglich sind.

Die angegebenen Reaktionsgleichungen sind beispielhaft zu verstehen; es können auch andere hydrolisierbare Sn- und/oder Ti-Verbindungen und Halogenide verwendet werden.

Die äußeren leitfähigen Schichten aus $SnO_{2-x}X_x$ und/oder $TiO_{2-x}X_x$ können auch naßchemische aufgebracht werden, indem etwa eine Umsetzung nach folgender als beispielhaft zu verstehender Reaktionsgleichung abläuft:

$$SnCl_2/SnCl_4 + xNH_4X \xrightarrow{+H_2O/-HCl} SnO_{2-x}X_x + xNH_4Cl$$

In den obigen Reaktionsgleichungen bedeutet X Halogenid, insbesondere J-, Br- oder Cl- und ganz besonders bevorzugt F-. Bei der naßchemischen Beschichtung ist die Verwendung von Gemischen (bzw. die nacheinander erfolgende Zugabe) von 2-und 4wertigen Sn-Verbindungen bzw. 3- und 4wertige Ti-Verbindungen vielfach bevorzugt; besonders bevorzugt bei der naßchemischen Beschichtung ist die Verwendung von $SnCl_2$ und $SnCl_4$ und/oder $TiCl_3$ und $TiCl_4$. Es können aber sowohl bei der naßchemischen Beschichtung als auch insbesondere bei der Wirbelbettbeschichtung Sn- bzw. Ti-Verbindungen nur einer Oxidationsstufe benutzt werden. Die naßchemische Abscheidung erfolgt vorzugsweise im sauren und insbesondere in einem pH-Bereich zwischen 1,2 und 4.

Bei der Verwendung von Alkohol als Lösungsmittel ist es möglich, bei der naßchemischen Beschichtung nur vierwertige Zinnverbindungen einzusetzen. In diesem Falle werden die alkoholische Lösung eines Zinnsalzes, z.B. Zinntetrachlorid, und die jeweiligen Ammoniumhalogenide der wäßrigen Suspension des Substrates bei einen pH-Wert von 1,0 bis 7,0, vorzugsweise von 1,8 bis 3,5 und einer Temperatur im Bereich von 40 bis 90 °C, vorzugsweise von 60 °C bis 90 °C so zudosiert, daß jeweils unmittelbar eine Hydrolyse und Abscheidung auf dem plättchenförmigen Substrat erfolgt.

Der durch das Massenverhältnis von $NH_4X$ und $snCl_2/SnCl_4$ und/oder $TiCl_4$ gegebene Dotierungsgrad beträgt bei allen drei Verfahren vorzugsweise weniger als 10 % und insbesondere nicht mehr als 5 %; ganz besonders bevorzugt sind Dotierungen mit einem Dotierungsgrad zwischen 1 und 5 %; dieselben bevorzugten Bereiche gelten auch bei der Verwendung anderer Sn-oder Ti-Verbindungen. Neben der explizit genannten Sn- oder Ti-Verbindungen können auch andere hydrolisierbare Sn- oder Ti-Verbindungen eingesetzt werden. Anstelle von $NH_4X$ können auch andere wasserlösliche bzw. bei den Wirbelbettreaktorbedingungen flüchtige Halogenide eingesetzt werden.

Die dotierten Zinnoxid- und/oder Titanoxidschichten sind in obigen Reaktionsgleichungen als $SnO_{2-x}X_x$ bzw. $TiO_{2-x}X_x$ geschrieben, wobei von diesen Formeln auch ggf. hydratisierte Zinnoxid- und/oder Titanoxidschichten umfaßt sind. Die Dotierung von $SnO_2$ und/oder $TiO_2$ mit Halogen zur Erzielung einer elektrischen Leitfähigkeit ist an sich bekannt und z.B. beschrieben in T. Endo, N. Moriata, T. Sato, M. Shimada, J. Mater. Res. 3(1988)392-397. Halogendotiertes Zinnoxid bzw. Titanoxid wurde bisher jedoch nur zur Beschichtung großflächiger Substrate wie z.B. von Glasflächen eingesetzt, und es war überraschend, daß bei der Beschichtung kleiner Partikel mit Abmessungen im Mikrometer bzw. Submikrometerbereich fest haftende Überzüge erhalten werden. Besonders überraschend war, daß bei der Beschichtung von plättchenförmigen Substraten glatte, fest haftende Schichten von gleichmäßiger Dicke resultieren, was unabdingbare Voraussetzung ist für die besonderen optischen Eigenschaften diese Systeme, nämlich Glanz und Interferenzfarben.

Die äußere Schicht kann sowohl nur aus mit Halogen dotiertem Zinn- oder Titanoxid bestehen oder aber auch eine Mischung aus diesen beiden dotierten Metalloxiden darstellen; das Mischungsverhältnis ist dabei nicht kritisch und es können beliebig zusammengesetzte Mischoxide aus $SnO_{2-x}X_x$ und $TiO_{2-x}X_x$ verwendet werden.

Weiterhin kann die äußere Schicht neben $SnO_{2-x}X_x$ und/oder $TiO_{2-x}X_x$ auch andere Metalloxide enthalten. So kann es z.B. vorteilhaft sein, dieser äußeren Schicht zur Erhöhung der thermischen oder mechanischen Stabilität, zur Erzeugung spezieller Farbeffekte oder aus weiteren Gründen andere Metalloxide wie z.B. Aluminiumoxid, Eisenoxid, Zirkonoxid, Chromoxid oder weitere Oxide zuzusetzen. Da durch diese Zusätze der spezifische Widerstand der Pigmente i.a. erhöht wird und vielfach auch das Reflexionsvermögen für IR-Strahlung und die Transparenz für sichtbares Licht der äußeren Schicht vermindert wird, wird deren Massenanteil an der äußeren Schicht vorzugsweise nicht zu hoch und insbesondere kleiner als 25 Gew.% gewählt. Besonders bevorzugt sind Pigmente, bei denen derartige Zusätze weniger als 10 Gew.% und insbesondere weniger als 5 Gew.% ausmachen und ganz besonders bevorzugt sind Pigmente, deren äußere Schicht ausschließlich aus mit Halogen dotiertem Zinn- und/oder Titanoxid besteht.

Die Dicke der äußeren Schicht ist vorzugsweise nicht zu groß und insbesondere kleiner als 300 nm. Der auf die Substratmasse bezogene Massenanteil der äußeren Schicht beträgt vorzugsweise zwischen 20 und 200 und insbesondere zwischen 60 und 150 Gew.%.

Der Gehalt an Halogeniden, einzeln oder im Gemisch, in der leitfähigen Schicht beträgt 0,1 bis 2,5 Gew.%, vorzugsweise 0,5 bis 1 Gew.%. Zweckmäßigerweise werden die Dotierstoffe als Zinn-IV- oder Ammoniumhalogenide eingesetzt. Die gewünschte homogene Verteilung von Zinn und Halogeniden in der leitfähigen Schicht läßt sich problemlos dadurch erreichen, daß die alkoholische Lösung eines Zinnsalzes, z.B. Zinntetrachlorid, und die jeweiligen Ammoniumhalogenide der wäßrigen Suspension des Trägermaterials bei einem pH-Wert von 1,0 bis 7,0, vorzugsweise von 1,8 bis 3,5 und einer Temperatur im Bereich von 40 bis 90 °C, vorzugsweise von 60 °C bis 90 °C so zudosiert werden, daß jeweils unmittelbar eine Hydrolyse und Abscheidung auf dem plättchenförmigen Trägermaterial erfolgt. Das beschichtete Trägermaterial wird abgetrennt und bei 300 °C bis 900 °C für 5 min bis 120 min kalziniert. Gegebenenfalls erweist sich in Abhängigkeit vom Trägermaterial eine zusätzliche Vorbelegung des Trägermaterials mit Zinndioxid nach bekannten Verfahren als zweckmäßig.

Durch die äußere Schicht wird den erfindungsgemäßen Pigmenten eine hohe elektrische Leitfähigkeit vermittelt, und der spezifische Widerstand beträgt i.a. je nach Zusammensetzung der äußeren Schicht zwischen 5 und $2 \cdot 10^5$ Ωcm.

Zur Messung des spezifischen Widerstandes der Pigmente wird in einem Acrylglas-Rohr mit dem Durchmesser von 2 cm eine kleine Menge von etwa 0,5 g Pigment mit Hilfe eines Gewichts von 10 kg zwischen zwei Metallstempel zusammengepreßt. Von den so verpreßten Pigmenten wird der elektrische Widerstand R gemessen. Aus der Schichtdicke L des komprimierten Pigments ergibt sich der spezifische Widerstand ρ nach der Beziehung

$$\zeta = R \cdot \frac{\pi \cdot (d/2)^2}{L} \text{ [Ohm} \cdot \text{cm]}$$

Besonders bevorzugt sind erfindungsgemäße Pigmente mit einem spezifischen Widerstand von nicht mehr als 50 kΩcm und insbesondere mit einem spezifischen Widerstand von nicht mehr als 25 kΩcm.

Die äußere Schicht verleiht den erfindungsgemäßen Pigmenten weiterhin ein hohes Reflexionsvermögen im IR-Bereich, das, je nach Zusammensetzung der äußeren Schicht, im Wellenlängenbereichzwischen 4.000 und 20.000 nm durchschnittlich höher ist als 75 % und in vielen Fällen sogar höher ist als 85 %. Ganz besonders bevorzugt sind erfindungsgemäße Pigmente, welche in dem genannten Wellenlängenbereich durchschnittlich ein Reflexionsvermögen von mehr als 90 % aufweisen.

Die optischen Eigenschaften der erfindungsgemäßen Pigmente im sichtbaren Spektralbereich können Im Hinblick auf die jeweilige Anwendung in einem weiten Bereich variiert und maßgeschneidert werden.

So können z.B. im Sichtbaren hochtransparente Pigmente erhalten werden, wenn transparente Substrate aus z. B. Glas oder anderen silikatischen Materialien verwendet werden, die direkt mit der äußeren Schicht überzogen werden. Insbesondere plättchenförmige Pigmente mit derartigen Eigenschaften sind hervorragend geeignet zur Herstellung von elektrisch leitfähigen, transparenten Beschichtungen. Dabei können Klarlackformulierungen, enthaltend derartige Pigmente, einfach in einer dünnen Schicht auf das jeweilige Substrat, z.B. eine Glasscheibe, ein metallisches Werkstück o.ä., aufgespritzt werden, während herkömmlichen Beschichtungen aus mit Halogen dotiertem Zinn- und/oder Titanoxid aufgedampft werden und dann anschließend zum mechanischen Schutz z.B. mit einer dünnen Kunststoffschicht überzogen werden, was wesentlich komplizierter ist. Durch die Beschichtung von z.B. Aluminiumsubstraten mit einer äußeren Schicht, enthaltend mit Halogen dotiertes Zinn- oder Titanoxid, wird die Hydrolyseempfindlichkeit der Aluminiumsubstrate drastisch vermindert, und derartige Pigmente können z.B. in Wasserlackformulierungen verwendet werden. Wie bereits erwähnt, ist es bei nichtsilikatischen Substraten häufig vorteilhaft, wenn zwischen Substrat und äußerer Schicht eine $SiO_2$-Schicht oder eine Schicht aus einem unlöslichen Silikat angeordnet wird. Neben Aluminiumsubstraten können auch andere metallische Substrate aus z.B. Chrom, Eisen oder Stahl verwendet werden, wobei plättchenförmige metallische Substrate bevorzugt sind.

Für elektrostatische Beschichtungen etwa von Gerätegehäusen oder für die Pigmentierung von antistaischem Bodenbelag und auch für weitere Anwendungen werden vielfach farbige, elektrisch leitfähige Pigmente mit hohem Reflexionsvermögen im IR benötigt, was, wie bereits erwähnt, durch Verwendung farbiger Substrate und/oder farbiger Metalloxidschichten, die zwischen Substratoberfläche und äußerer Schicht aufgebracht werden, und/oder durch Zumischung farbiger Metalloxide zur äußeren Schicht, erreicht werden kann, wobei das Deckvermögen in weiten Grenzen variiert werden kann. Auch hier ist es oftmals vorteilhaft, zwischen den Metalloxidschichten und der äußeren, elektrisch leitfähigen Schicht eine Zwischenschicht aus $SiO_2$ oder einem anderen unlöslichen silikatischen Material aufzubringen.

Die aufgezählten Anwendungsmöglichkeiten der erfindungsgemäßen Pigmente sind nur beispielhaft zu verstehen und sollen die Erfindung lediglich erläutern, ohne sie zu begrenzen. Wie auch immer jedoch das spezielle Anforderungsprofil für eine bestimmte Anwendung aussehen mag, der Fachmann kann die Eigenschaften der Pigmente in einem weiten Bereich variieren und im Hinblick auf die jeweilige Anwendung optimieren.

Die Herstellung der erfindungsgemäßen Pigmente erfolgt dadurch, daß das jeweils ausgewählte Substrat zunächst ggf. mit einer oder mehreren anderen Metalloxidschichten aus z.B. Chromoxid, Eisenoxid, Zirkoniumoxid, Aluminiumoxid und/oder weiteren Metalloxiden beschichtet wird. Verfahren zur Abscheidung anderer Metalloxide auf plättchenförmige Substrate sind z.B. beschrieben in DE 19 59 998, DE 22 15 191, DE 22 44 298, DE 23 13 331, DE 25 22 572, DE 31 37 808, DE 31 51 343, DE 31 51 355, DE 32 11 602 oder DE 32 35 017, und es hat sich herausgestellt, daß die dort vorgestellten Verfahren auch zur Beschichtung nicht plattchenförmiger Substrate verwendet werden können.

Die Aufbringung dünner Zwischenschichten aus $SiO_2$ bzw. anderen unlöslichen silikatischen Materialien auf plättchenförmige Substrate ist beschrieben in EP 0,373,575, und es hat sich gezeigt, daß dieses Verfahren auch auf nicht plättchenförmige Substrate übertragbar ist. Derartige Zwischenschichten werden, falls erforderlich, insbesondere unmittelbar vor der äußeren, elektrisch leitfähigen Schicht angeordnet, obwohl es auch möglich ist, daß sich die silikatische Zwischenschicht bzw. Zwischenschichten zwischen den Metalloxidschichten befinden.

Die solcherart hergestellten, ggf. beschichteten Substrate werden anschließend nach den oben beschriebenen Verfahren mit dem äußeren, elektrisch leitfähigen Überzug versehen. Die Herstellung äußerer Schichten, welche neben mit Halogen dotiertem Zinn- und/oder Titanoxid noch ein oder mehrere weitere Metalloxide enthalten, erfolgt im Wirbelbettverfahren, indem in obiger Gasphasenreaktion weitere Metallchloride und/oder Metallcarbonyle umgesetzt werden; bei der naßchemischen Reaktion werden dagegen Zinn- bzw. Titanchlorid sowie ggf. weitere Metallchloride enthaltende Lösungen in geeigneter Weise mit löslichen Fluoriden zur Reaktion gebracht.

Die erfindungsgemäßen Pigmente zeichnen sich aus durch eine hohe elektrische Leitfähigkeit, durch ein hohes Reflexionsvermögen für IR-Strahlung und durch ein im Hinblick auf die jeweilige Anwendung optimierbares Deckvermögen und eine optimierbare Farbigkeit. Die erfindungsgemäßen Pigmente können je nach ihrer speziellen Ausgestaltung für eine ganze Reihe verschiedener Anwendungen, wie etwa für durchsichtige Elektroden zur Ansteuerung z.B. von Flüssigkristalldisplays, für antistatische Lackierungen oder für antistatische Kunststoffe, Bodenbeläge etc. verwendet werden. Die erfindungsgemäßen Pigmente erfüllen die bei den jeweiligen Anwendungen auftretenden Anforderungen oftmals besser als herkömmliche Pigmente und stellen in jedem Fall eine erhebliche Verbreiterung des dem Fachmann verfügbaren Pools derartiger Verbindungen dar. Somit kommt den erfindungsgemäßen Verbindungen eine erhebliche wirtschaftliche Bedeutung zu.

Die folgenden Beispiele sollen die Erfindung erläutern, ohne sie zu begrenzen.

**Beispiel 1**

100 g Glimmer mit einer Teilchengröße von 10-60 µm werden in 2000 ml vollentsalztem Wasser suspendiert, auf 75 °C erhitzt und innerhalb von 4 Stunden unter Rühren kontinuierlich mit 400 ml einer salzsauren Lösung versetzt, welche 84,6 g $SnCl_4 \cdot 5\ H_2O$, 6,0 g $SnCl_2 \cdot 2\ H_2O$ und 100 ml konz. HCl enthält. Gleichzeitig wird der Glimmersuspension über 4 Stunden aus einem anderen Gefäß eine $NH_4F$-Lösung (4,0 g $NH_4F$ in 300 ml $H_2O$) zudosiert. Der pH-Wert wird während der gesamten Reaktionszeit mit Hilfe von 15%iger Natronlauge konstant auf 1,8 gehalten. Über die Reaktionssuspension wird während der Umsetzung Stickstoff geleitet. Man läßt 30 min bei 75 °C nachrühren und anschließend 10 Stunden absitzen. Dann wird der Feststoff abfiltriert, mit etwa 20 ml Wasser chloridfrei gewaschen und bei 110 °C getrocknet. Das so erhaltene Produkt wird im Temperaturbereich von 300-700 °C an Luft oder unter Stickstoffatmosphäre kalziniert. Man erhält helle Pigmente, die in der leitenden Schicht auf der Oberfläche des Glimmers die für die spezifische Leitfähigkeit ausreichenden Mengen an Fluorid enthalten.

In der folgenden Tabelle sind die bei verschiedenen Glühtemperaturen gemessenen spezifischen Widerstände aufgeführt:

| Glühtemperatur/°C | spezifischer Widerstand/kOhm · cm |
|---|---|
| 300 | 2.000 |
| 500 | 9 |
| 600 | 25 |
| 700 | 150 |

Der Widerstand der Pigmente wird mit der oben angegebenen Anordnung gemessen. Der Innendurchmesser des Plexiglasrohrs beträgt d = 2 cm, und es werden etwa 0,5 g des hergestellten Pigments unter einer Belastung von 10 kg zwischen den beiden Metallstempeln zusammengepreßt.

**Beispiel 2**

Analog Beispiel 1 werden 100 g Glimmer mit einer Teilchengröße von 10-60 µm in 2000 ml vollentsalztem Wasser suspendiert, auf 75 °C erhitzt und innerhalb von 4 Stunden unter Rühren kontinuierlich mit 400 ml einer salzsauren Lösung versetzt, welche 37,2 g $SnCl_4 \cdot 5\ H_2O$, 6,7 g $SnCl_2 \cdot 2\ H_2O$ und 100 ml konz. HCl enthält. Gleichzeitig wird der Glimmersuspension über 4 Stunden aus einem anderen Gefäß eine $NH_4F$-Lösung (2,0 g $NH_4F$ in 300 ml $H_2O$) zudosiert. Der pH-Wert wird während der gesamten Reaktionszeit mit Hilfe von 15%iger Natronlauge konstant auf 1,8 gehalten. Über die Reaktionssuspension wird während der Umsetzung Stickstoff geleitet. Man läßt 30 min bei 75 °C nachrühren und anschließend 10 Stunden absitzen. Dann wird der Feststoff abfiltriert, mit etwa 20 ml Wasser chloridfrei gewaschen und bei 110 °C getrocknet.

Das so erhaltene Produkt wird im Temperaturbereich von 300-700 °C an Luft oder unter Stickstoffatmosphäre kalziniert. Man erhält helle Pigmente, die in der leitenden Schicht auf der Oberfläche des Glimmers die für die spezifische Leitfähigkeit ausreichenden Mengen an Fluorid enthalten.

In der folgenden Tabelle sind die bei verschiedenen Glühtemperaturen gemessenen spezifischen Widerstände aufgeführt:

| Glühtemperatur/°C | spezifischer Widerstand/kOhm · cm |
|---|---|
| 300 | 140 |
| 400 | 4 |
| 500 | 1 |
| 600 | 45 |

Der Widerstand der Pigmente wird mit der in Beispiel 1 angegebenen Anordnung gemessen.

**Beispiel 3**

Analog Beispiel 1 werden 100 g Glimmer mit einer Teilchengröße von 10-60 µm in 2000 ml vollentsalztem Wasser suspendiert, auf 75 °C erhitzt und innerhalb von 4 Stunden unter Rühren kontinuierlich mit 400 ml einer salzsauren Lösung versetzt, welche 37,2 g $SnCl_4 \cdot 5 H_2O$, 6,7 g $SnCl_2 \cdot 2 H_2O$ und 100 ml konz. HCl enthält. Gleichzeitig wird der Glimmersuspension über 4 Stunden aus einem anderen Gefäß eine Flußsäure-Lösung (2,63 g Flußsäure, 38-40 %, reinst in 300 ml $H_2O$) zudosiert. Der pH-Wert wird während der gesamten Reaktionszeit mit Hilfe von 15%iger Natronlauge konstant auf 1,8 gehalten. Über die Reaktionssuspension wird während der Umsetzung Stickstoff geleitet. Man läßt 30 min bei 75 °C nachrühren und anschließend 10 Stunden absitzen. Dann wird der Feststoff abfiltriert, mit etwa 20 ml Wasser chloridfrei gewaschen und bei 110 °C getrocknet. Das so erhaltene Produkt wird im Temperaturbereich von 300-700 °C an Luft oder unter Stickstoffatmosphäre kalziniert. Man erhält helle Pigmente, die in der leitenden Schicht auf der Oberfläche des Glimmers die für die spezifische Leitfähigkeit ausreichenden Mengen an Fluorid enthalten.

In der folgenden Tabelle sind die bei verschiedenen Glühtemperaturen gemessenen spezifischen Widerstände aufgeführt:

| Glühtemperatur/°C | spezifischer Widerstand/kOhm · cm |
|---|---|
| 300 | 500 |
| 400 | 190 |
| 500 | 22 |
| 600 | 11 |
| 700 | 50 |

Der Widerstand der Pigmente wird mit der in Beispiel 1 angegebenen Anordnung gemessen.

**Beispiel 4**

Analog Beispiel 1 werden 100 g Glimmer mit einer Teilchengröße von 10-60 µm in 2000 ml vollentsalztem Wasser suspendiert, auf 75 °C erhitzt und innerhalb von 4 Stunden unter Rühren kontinuierlich mit 400 ml einer salzsauren Lösung versetzt, welche 76,0 g $TiCl_4$, 13,4 g $SnCl_2 \cdot 2 H_2O$ und 100 ml konz. HCl enthält. Gleichzeitig wird der Glimmersuspension über 4 Stunden aus einem anderen Gefäß eine $NH_4F$-Lösung (4,0 g $NH_4F$ in 300 ml $H_2O$) zudosiert. Der pH-Wert wird während der gesamten Reaktionszeit mit Hilfe von 15%iger Natronlauge konstant auf 1,8 gehalten. Über die Reaktionssuspension wird während der Umsetzung Stickstoff geleitet. Man läßt 30 min bei 75 °C nachrühren und anschließend 10 Stunden absitzen. Dann wird der Feststoff abfiltriert, mit etwa 20 ml Wasser chloridfrei gewaschen und bei 110 °C getrocknet. Das so erhaltene Produkt wird im Temperaturbereich von 300-700 °C an Luft oder unter Stickstoffatmosphäre kalziniert. Man erhält helle Pigmente, die in der leitenden Schicht auf der Oberfläche des Glimmers die für die spezifische Leitfähigkeit ausreichenden enge an Fluorid enthalten.

In der folgenden Tabelle sind die bei verschiedenen Glühtemperaturen gemessenen spezifischen Widerstände aufgeführt:

| Glühtemperatur/°C | spezifischer Widerstand/kOhm · cm |
|---|---|
| 500 | 20.000 |
| 600 | 70.000 |

Der Widerstand der Pigmente wird mit der in Beispiel 1 angegebenen Anordnung gemessen.

**Beispiel 5**

Analog Beispiel 1 werden 100 g Glimmer mit einer Teilchengröße von 10-60 µm in 2000 ml vollentsalztem Wasser suspendiert, auf 75 °C erhitzt und innerhalb von 4 Stunden unter Rühren kontinuierlich mit 400 ml einer salzsauren Lösung versetzt, welche 76,0 g $TiCl_4$, 105 g einer 15%igen $TiCl_3$- Lösung und 100 ml konz. HCl enthält. Gleichzetig wird der Glimmersuspension über 4 Stunden aus einem anderen Gefäß eine $NH_4F$-Lösung (4,0 g $NH_4F$ In 300 ml $h_2O$) zudosiert. Der pH-Wert wird während der gesamten Reaktionszeit mit Hilfe von 15%iger Natronlauge konstant auf 1,8 gehalten. Über die Reaktionssuspension wird während der Umsetzung Stickstoff geleitet. Man läßt 30 min bei 75 °C

nachrühren und anschließend 10 Stunden absitzen. Dann wird der Feststoff abfiltriert, mit etwa 20 ml Wasser chloridfrei gewaschen und bei 110 °C getrocknet. Das so erhaltene Produkt wird im Temperaturbereich von 300-700 °C an Luft oder unter Stickstoffatmosphäre kalziniert. Man erhält helle Pigmente, die in der leitenden Schicht auf der Oberfläche des Glimmers die für die spezifische Leitfähigkeit ausreichenden Mengen an Fluorid enthalten.

In der folgenden Tabelle sind die bei verschiedenen Glühtemperaturen gemessenen spezifischen Widerstände aufgeführt:

| Glühtemperatur/°C | spezifischer Widerstand/kOhm · cm |
|---|---|
| 500 | 80.000 |
| 600 | 130.000 |

Der Widerstand der Pigmente wird mit der in Beispiel 1 angegebenen Anordnung gemessen.

**Beispiel 6**

100 g Glimmer mit einer Teilchengröße von 10-60 µm werden in 2000 ml einer 25,0 g $NH_4F$ enthaltenden wäßrigen Lösung suspendiert. Die Suspension wird auf 85 °C erhitzt. Anschließend wird eine Lösung, hergestellt aus 40,8 g $TiCl_4$, 600 ml Ethanol, 100 ml konzentrierter Salzsäure und 300 ml Wasser, unter intensivem Rühren zügig in die vorgelegte Suspension getropft. Während der Zugabe dieser Lösung wird der pH-Wert mittels der Ammoniaklösung auf 7,0 gebracht und während der 3stündigen Nachrührphase bei 85 °C bei diesem Wert gehalten. Das Reaktionsgefäß ist in dieser Zeit offen, so daß ein erheblicher Teil an Ethanol und Wasser verdampft wird. Man läßt nunmehr 10 Stunden absitzen und arbeitet das Produkt wie in Beispiel 1 beschrieben auf.

In der folgenden Tabelle sind die bei verschiedenen Glühtemperaturen gemessenen spezifischen Widerstände aufgeführt:

| Glühtemperatur/°C | spezifischer Widerstand/kOhm · cm |
|---|---|
| 500 | 130.000 |
| 600 | 200.000 |

Der Widerstand der Pigmente wird mit der in Beispiel 1 angegebenen Anordnung gemessen.

**Beispiel 7**

50 g mit $TiO_2$ pigmentierte $SiO_2$-Plättchen, hergestellt gemäß der internationalen Anwendung PCT/EP 92/02 351, werden durch Rühren mit einer Geschwindigkeit von 600 UpM in 1 l Wasser suspendiert, auf 75 °C erhitzt, durch Zugabe von verdünnter Salzsäure ein pH-Wert von 1,8 eingestellt und eine wäßrige Zinntetrachloridlösung, bestehend aus 2,95 g $SnCl_4 \cdot 5\ H_2O$ und 5 ml konzentrierter Salzsäure in 50 ml Wasser, mit einer Geschwindigkeit von 2 ml/min zudosiert. Der pH-Wert wird durch Zugabe von $NH_3$-Lösung konstant gehalten. Anschließend wird eine Ammoniumfluoridlösung, bestehend aus 30 g $NH_4F$ in 150 ml Wasser zugegeben, auf 85 °C erhitzt und der pH-Wert mit verdünnter Salzsäure auf 3,5 eingestellt. Danach erfolgt mit einer Geschwindigkeit von 2 ml/min die Zugabe einer Lösung von 25 g wasserfreiem Zinntetrachlorid in 500 ml Ethanol. Durch Zugabe von $NH_3$-Lösung wird der pH-Wert konstant gehalten. Anschließend wird die Suspension abgesaugt, salzfrei gewaschen, im Trockenschrank getrocknet und bei 500 °C an Luft für 15 min kalziniert.

Man erhält ein gelblich-weißes Pigment mit einem Pulverwiderstand von 420 kOhm · cm.

**Beispiel 8**

50 g mit $TiO_2$ pigmentierte $SiO_2$-Plättchen werden in 500 ml Wasser suspendiert. Anschließend wird bei 75 °C, pH von 1,8, einer Rührgeschwindigkeit von 500 UpM und einer Dosierrate von 0,8 ml/min eine Lösung von 2,9 g $SnCl_4 \cdot 5\ H_2O$ und 5 ml konz. HCl in 40 ml Wasser zugegeben, um die Oberfläche mit $SnO_2$ zu belegen. Der pH-Wert wird durch Zugabe von 25%iger $NH_3$-Lösung konstant gehalten. Nach Ende der ersten Belegung werden 25 g $NH_4F$ zugegeben und mit HCl ein pH von 3,5 eingestellt. Danach erfolgt mit einer Dosierrate von 2 ml/min die Zugabe einer Lösung von 55 g $SnCl_4$ in 400 ml Ethanol in die jetzt auf 85 °C erwärmte Suspension, wobei der pH ebenfalls mit 25%iger $NH_3$-Lösung konstant gehalten wird. Nach Ende der Zugabe läßt man etwas abkühlen, um anschließend die Suspension über einen Filter abzusaugen. Die im Trockenschrank getrocknete Probe wird bei 500 °C für 30 min geglüht; davon eine Probe unter Stickstoff, eine Probe an Luft. Drei Wochen nach der Herstellung weisen beide Proben einen Pulverwiderstand von etwa

20 kOhm · cm auf.

**Patentansprüche**

1. Helles, elektrisch leitfähiges Pigment auf der Basis eines, gegebenenfalls mit einer oder mehreren Metalloxidschichten überzogenen plättchenförmigen Substrates und mit Halogen dotiertem Zinn- und/oder Titanoxid als leitfähiger Schicht.

2. Pigment nach Anpruch 1, wobei zwischen der gegebenenfalls mit einer oder mehreren Schichten aus einem oder mehreren Metalloxiden beschichteten Substratoberfläche und der äußeren leitfähigen Schicht eine, gegebenenfalls hydratisierte Siliziumdioxidschicht oder eine Schicht eines unlöslichen Silikats angeordnet ist.

3. Pigment nach einem der Ansprüche 1 und 2, worin das plättchenförmige Substrat aus Schichtsilikaten oder Glasplättchen besteht.

4. Pigment nach einem der Ansprüche 1 bis 3, worin das plättchenförmige Substrat aus einer transparenten, anorganischen Matrix besteht, die ein anorganisches Pigment enthält.

5. Pigment nach Anspruch 4, worin die Matrix Siliziumdioxid ist.

6. Pigment nach Anspruch 4, worin das anorganische Pigment Titandioxid ist.

7. Pigment nach Anspruch 1, worin das plättchenförmige Substrat aus Siliziumdioxidplättchen besteht.

8. Verfahren zur Herstellung eines Pigments nach einem der Ansprüche 1-7, dadurch gekennzeichnet, daß das, gegebenenfalls mit einer oder mehreren anderen Metalloxid- und/oder Siliziumoxidschichten bedeckte Substrat in einem Wirbelbettreaktor bei erhöhten Temperaturen mit einem Gasgemisch, welches auf hydrolisierbaren Titan- und/oder Zinnverbindungen, Wasser und einem oder mehreren Halogeniden basiert, umgesetzt wird.

9. Verfahren zur Herstellung eines Pigments nach einem der Ansprüche 1-7, dadurch gekennzeichnet, daß das gegebenenfalls mit einer oder mehreren anderen Metalloxid- und/oder Siliziumoxidschichten bedeckte Substrat in einem wäßrigen Medium suspendiert und daß bei einem für die Abscheidung von halogendotierten Zinn- und/oder Titanoxidschichten geeignetem pH eine oder mehrere hydrolisierbare Titan- und/oder Zinnverbindungen und ein oder mehrere wasserlösliche Halogenide zugegeben werden.

10. Verwendung der Pigmente nach einem der Ansprüche 1-7, zur Pigmentierung von Lacken, Druckfarben, Kunststoffsystemen oder Coatings.

**Claims**

1. Light-coloured, electrically conductive pigment based on a platelet-like substrate optionally coated with one or more metal oxide layers and containing halogen-doped tin oxide and/or titanium oxide as conductive layer.

2. Pigment according to Claim 1, wherein a hydrated or unhydrated silicon dioxide layer or a layer of an insoluble silicate is arranged between the substrate surface, which is optionally coated with one or more layers of one or more metal oxides, and the outer conductive layer.

3. Pigment according to either of Claims 1 or 2, wherein the platelet-like substrate comprises sheet silicates or glass platelets.

4. Pigment according to any one of Claims 1 to 3, wherein the platelet-like substrate comprises a transparent, inorganic matrix comprising an inorganic pigment.

5. Pigment according to Claim 4, wherein the matrix is silicon dioxide.

6. Pigment according to Claim 4, wherein the inorganic pigment is titanium dioxide.

**7.** Pigment according to Claim 1, wherein the platelet-like substrate comprises silicon dioxide platelets.

**8.** Process for the preparation of a pigment according to any one of Claims 1 to 7, characterised in that the substrate, which may be covered with one or more other metal oxides and/or silicon oxide layers, is reacted in a fluidised bed reactor at elevated temperatures with a gas mixture based on hydrolysable titanium compounds and/or tin compounds, water and one or more halides.

**9.** Process for the preparation of a pigment according to any one of Claims 1 to 7, characterised in that the substrate which may be covered with one or more other metal oxide and/or silicon oxide layers is suspended in an aqueous medium and in that one or more hydrolysable titanium compounds and/or tin compounds and one or more water-soluble halides are added at a pH suitable for depositing halogen-doped tin oxide and/or titanium oxide layers.

**10.** The use of the pigments according to any one of Claims 1 to 7 for pigmenting lacquers, printing inks, plastics systems or coatings.

**Revendications**

**1.** Pigment clair conducteur de l'électricité à base d'un substrat en forme de plaquettes éventuellement revêtu d'une ou plusieurs couches d'oxyde métallique et avec de l'oxyde d'étain et/ou de titane additionné d'halogène comme couche conductrice.

**2.** Pigment selon la revendication 1 dans lequel entre la surface du substrat éventuellement revêtu d'une ou plusieurs couches d'un ou plusieurs oxydes métalliques et la couche conductrice externe est disposée une couche éventuellement hydratée de dioxyde de silicium ou une couche d'un silicate insoluble.

**3.** Pigment selon l'une des revendications 1 ou 2, dans lequel le substrat en forme de plaquettes se compose de silicates stratifiés ou de plaquettes de verre.

**4.** Pigment selon l'une des revendications 1 à 3, dans lequel le substrat en forme de plaquettes se compose d'une matrice inorganique transparente qui contient un pigment inorganique.

**5.** Pigment selon la revendication 4 dans lequel la matrice est du dioxyde de silicium.

**6.** Pigment selon la revendication 4 dans lequel le pigment inorganique est du dioxyde de titane.

**7.** Pigment selon la revendication 1 dans lequel le substrat en forme de plaquettes se compose de plaquettes de dioxyde de silicium.

**8.** Procédé de préparation d'un pigment selon l'une des revendications 1-7, caractérisé en ce qu'on fait réagir le substrat éventuellement recouvert d'une ou plusieurs autres couches d'oxyde métallique et/ou d'oxyde de silicium dans un réacteur à lit fluidisé à des températures augmentées, avec un mélange gazeux qui est à base de composés de titane et/ou d'étain hydrolysables, d'eau et d'un ou plusieurs halogénures.

**9.** Procédé de préparation d'un pigment selon l'une des revendications 1-7, caractérisé en ce qu'on met en suspension dans un milieu aqueux le substrat éventuellement recouvert d'une ou plusieurs autres couches d'oxyde métallique et/ou d'oxyde de silicium et en ce qu'on ajoute à un pH approprié pour le dépôt de couches d'oxyde d'étain et/ou de titane additionnées d'halogènes, un ou plusieurs composés de titane et/ou d'étain hydrolysables et un ou plusieurs halogénures solubles dans l'eau.

**10.** Application des pigments selon l'une des revendications 1-7 à la pigmentation de vernis, d'encres d'imprimerie, de systèmes de matières synthétiques ou de revêtements.